# FASCICULE DE BREVET EUROPEEN

(11) **EP 2 034 198 B1**
(45) Date de publication et mention de la délivrance du brevet: **24.02.2010**
(21) Numéro de dépôt: 08354054.2
(22) Date de dépôt: 07.08.2008
(51) Int. Cl.: F16B 45/02

(54) **Mousqueton à doigt pivotant équipé d'une bague de verrouillage**
Karabiner mit Kippfinger, der mit einem Verschlussring ausgestattet ist
Snap hook with pivotal gate fitted with a locking ring

(30) Priorité: 31.08.2007 FR 0706123
(43) Date de publication de la demande: 11.03.2009
(73) Titulaire: Zedel, 38920 Crolles (FR)
(72) Inventeur: Petzl, Paul, 38530 Barraux (FR); Choffy, Christophe, 38660 Saint Hilaire du Touvet (FR); Lanez, Raphaël, 38920 Crolles (FR)
(74) Mandataire: Hecké, Gérard

(56) Documents cités:
- DE-A1- 2 536 204
- DE-U1- 29 610 293
- FR-A- 2 803 343

## Description

### Domaine technique de l'invention

L'invention est relative à un mousqueton comprenant un corps fixe en forme de C, ayant une première extrémité conformée en un élément de retenue, et une deuxième extrémité d'articulation d'un doigt mobile autour d'un axe de pivotement entre une position fermée et une position ouverte, ledit doigt comportant:
- un élément d'accrochage situé à l'opposé de l'axe de pivotement pour coopérer avec l'élément de retenue dans la position fermée,
- un ressort de rappel du doigt vers la position fermée,
- et une bague de verrouillage montée coaxialement autour du doigt en ayant une longueur inférieure à celle du doigt, ladite bague étant déplaçable entre une première position verrouillée autorisant un blocage du doigt dans la position fermée, et une deuxième position déverrouillée permettant le déplacement du doigt vers la position ouverte.

### État de la technique

Dans un mousqueton connu du genre mentionné, par exemple décrit dans le document DE 2536204, le doigt mobile est généralement formé par un barreau métallique de section cylindrique, et la bague de verrouillage coaxiale présente un diamètre extérieur supérieur à celui du barreau. Lors du déplacement de la bague de verrouillage vers la position fermée et verrouillée du doigt, un décrochement subsiste entre la bague et le corps du mousqueton. La présence de ce décrochement risque de perturber le glissement de la corde à l'intérieur du corps.

### Objet de l'invention

L'objet de l'invention consiste à réaliser un mousqueton à bague de verrouillage, limitant tout risque d'accrochage de la corde lorsque le doigt est fermé et verrouillé.

Le mousqueton selon l'invention est caractérisé en ce que l'élément d'accrochage est coiffe par une tête d'extrémité entourant partiellement l'élément de retenue en position fermée du doigt, et comportant un épaulement servant de butée de fin de course à la bague dans la première position verrouillée, le diamètre extérieur dudit épaulement correspondant sensiblement au diamètre de la bague de verrouillage.

Selon un mode de réalisation préférentiel, la tête d'extrémité est dotée d'une portion latérale tronconique présentant un angle d'inclinaison compris entre 10° et 20° par rapport à la direction longitudinale du doigt, et d'une saignée frontale de passage de l'élément de retenue.

La présence de la tête d'extrémité tronconique évite tout décrochement avec le profil interne du mousqueton, et permet un bon glissement de la corde à l'intérieur du corps lorsque le doigt est fermé.

L'élément de retenue mâle comprend une languette et une protubérance formant une structure en T renversé, et l'élément d'accrochage femelle est doté d'un évidement de réception de l'élément de retenue.

Dans le cas d'une bague de verrouillage à visser, un premier filetage à l'intérieur de la bague coopère par vissage avec un deuxième filetage du doigt, lequel possède un nombre de filets inférieur à celui du premier filetage.

### Description sommaire des dessins

D'autres avantages et caractéristiques ressortiront plus clairement de la description qui va suivre de différents modes de réalisation de l'invention donnés à titre d'exemples non limitatifs et représentés aux dessins annexés, dans lesquels :
- la figure 1 est une vue en perspective d'un mousqueton selon l'invention, le doigt étant en position fermée et verrouillée ;
- la figure 2 montre une vue identique de la figure 1 lorsque le doigt se trouve en position ouvert et déverrouillée ;
- la figure 3 représente une vue de biais du mousqueton de la figure 1 ;

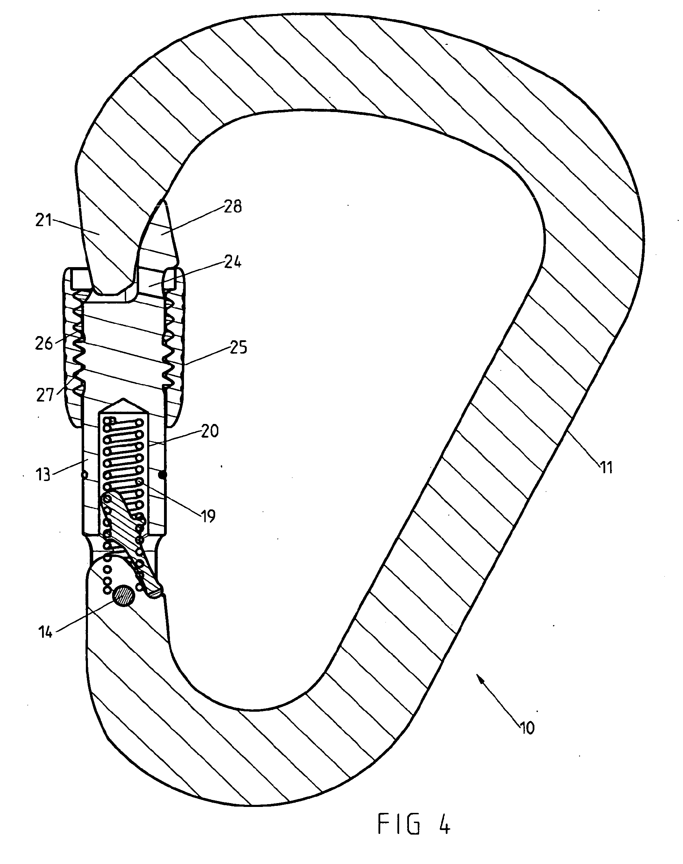

- la figure 4 est une vue en coupe verticale de la figure 1 ;

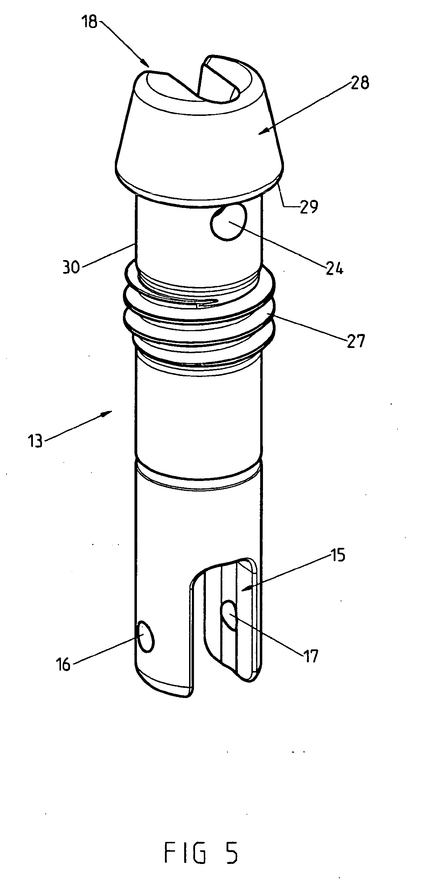

- les figures 5 et 6 montrent deux vues en perspective du doigt mobile, respectivement depuis l'intérieur, et depuis l'extérieur du corps.

### Description détaillée de l'invention

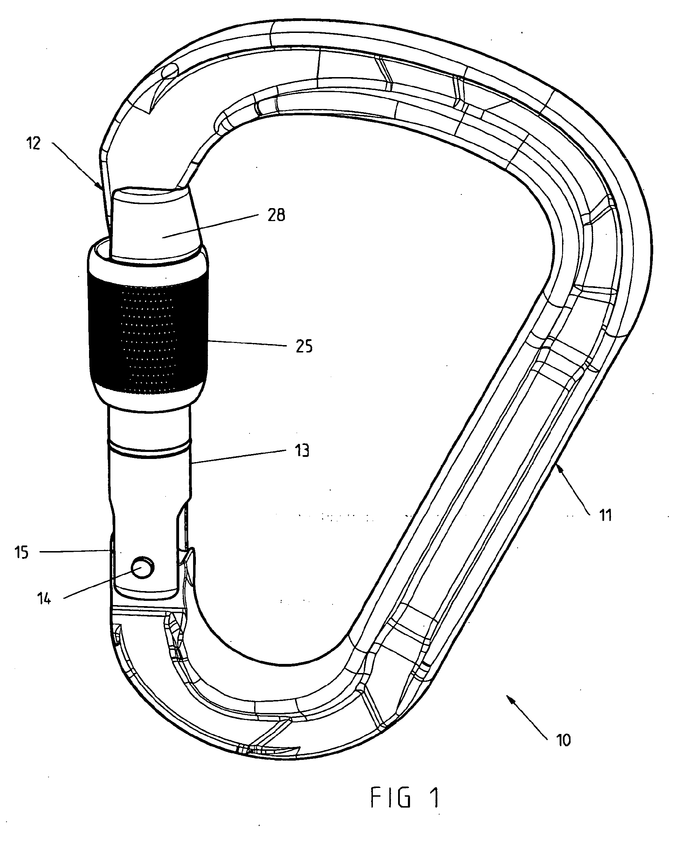

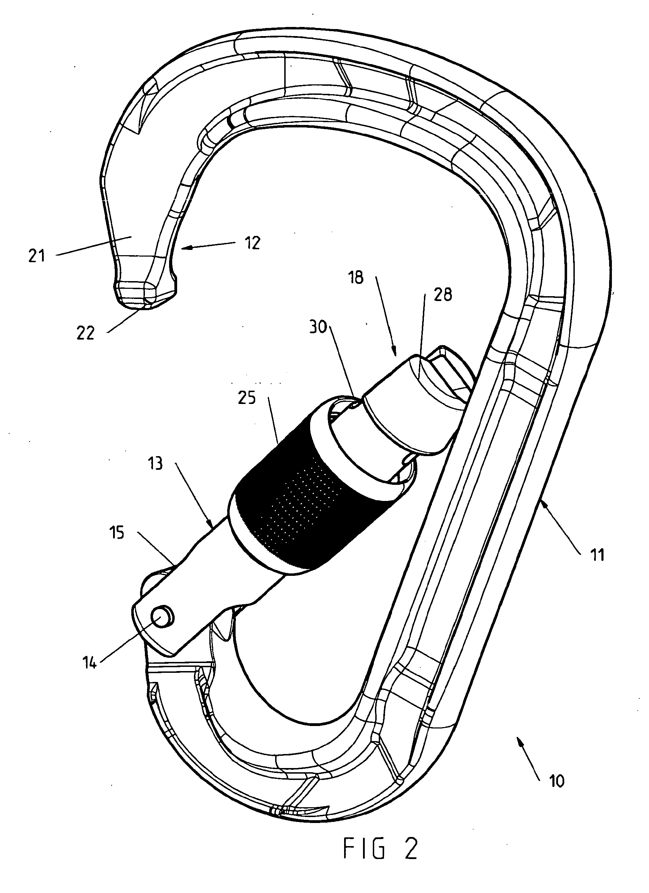

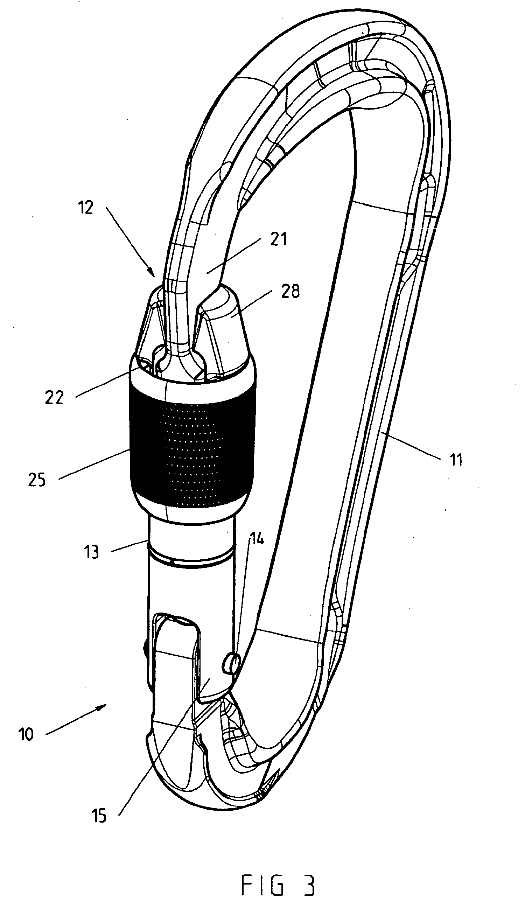

En référence aux figures, un mousqueton 10 comporte un corps 11 métallique en forme de C, ayant une première extrémité dotée d'un élément de retenue 12 mâle, et une deuxième extrémité d'articulation d'un doigt 13 mobile autour d'un axe de pivotement 14 entre une position de fermeture (figures 1 et 3), et une position d'ouverture (figure 2).

Le doigt 13 comprend un barreau métallique, comprenant une chape 15 en forme de U renversé, destinée à coiffer la deuxième extrémité du corps 11, ladite chape étant percée de deux orifices 16, 17 diamétralement opposés pour le passage de l'axe de pivotement 14. L'extrémité opposée du doigt 13 est pourvue d'un élément d'accrochage 18 femelle destiné à s'engager dans l'élément de retenue 12 mâle dans la position de fermeture. Un ressort de rappel 19 est logé dans un alésage 20 borgne du doigt 13 du côté de l'axe 14, et sollicite le doigt 13 vers le position de fermeture.

L'élément de retenue 12 mâle du corps 11 présente une structure en T renversé comportant une languette 21 prolongée par une protubérance 22. L'élément d'accrochage 18 femelle du doigt 13 comprend un évidement 23 de forme conjuguée à l'élément de retenue 12 mâle, et un trou 24 débouchant à l'arrière et en communication avec l'évidement 23.

Une bague de verrouillage 25 est montée coaxialement autour du doigt 13, et présente une longueur inférieure à ce dernier. La paroi cylindrique interne de la bague de verrouillage 25 est munie d'un premier filetage 26 destiné à coopérer par vissage et dévissage avec un deuxième filetage 27 du doigt 13. La bague de verrouillage 25 est ainsi déplaçable par translation le long du doigt 13 entre une première position verrouillée (figure 3) autorisant le blocage du doigt 13 dans la position de fermeture, et une deuxième position déverrouillée (figure 2) permettant le déplacement du doigt 13 vers l'intérieur du corps correspondant à la position d'ouverture.

Le deuxième filetage 27 du doigt 13 est agencé longitudinalement entre la chape 15 et l'élément d'accrochage 18 femelle, et comporte un nombre de filets inférieur à celui du premier filetage 26 de la bague de verrouillage 25.

L'élément d'accrochage 18 femelle comporte en plus une tête d'extrémité 28 en forme de coiffe tronconique réunie à l'extrémité du doigt 13 par un épaulement 29 servant de butée à la bague 25 en fin de course de vissage vers la première position verrouillée. Le sommet de la tête d'extrémité 28 est plat, et la partie frontale est découpée par une saignée 31 pour autoriser l'entrée de la languette 21 et de la protubérance 22 dans l'élément d'accrochage 18 femelle.

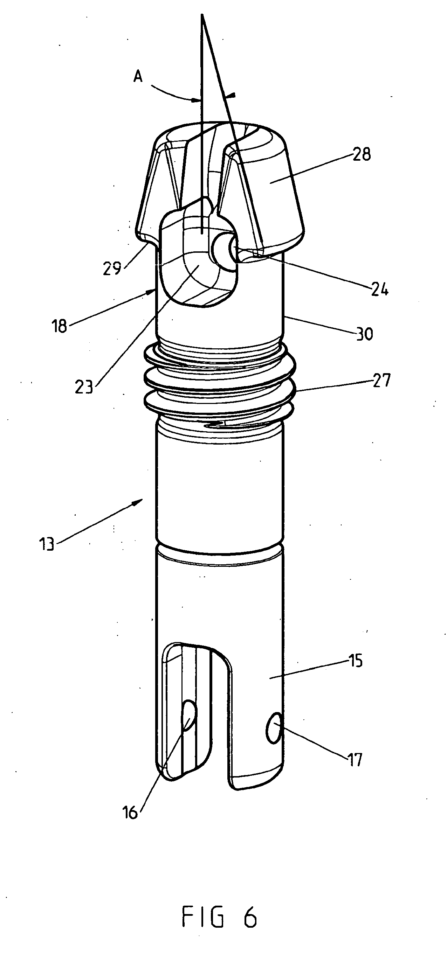

L'angle d'inclinaison A (figure 6) de la tête d'extrémité 28 tronconique avec la direction longitudinale du doigt 13 est compris entre 10° et 20°, de préférence 11 °, de manière à se raccorder sans décrochement à la forme de la languette 21 de la première extrémité du corps 11 lorsque le doigt 13 se trouve en position de fermeture.

La périphérie cylindrique du doigt 13 située entre le deuxième filetage 27 et l'épaulement 29 comprend un revêtement 30 coloré, par exemple en rouge, visible dans l'état déverrouillé de la bague de verrouillage 25.

Le pivotement du doigt 13 vers la position de fermeture s'opère grâce à la force de rappel du ressort 19, la bague 25 étant dans la deuxième position déverrouillée rendant visible le revêtement 30 coloré. L'élément d'accrochage 18 femelle du doigt 13 s'engage sur l'élément de retenue 12 mâle, et la tête d'extrémité 28 tronconique entoure partiellement la languette 21 du côté intérieur en évitant tout décrochement avec le corps 11. Il suffit ensuite de visser la bague 25 pour la déplacer en translation vers la première position verrouillée, laquelle est atteinte lorsque l'extrémité supérieure de la bague 25 vient en butée contre l'épaulement 29 de la tête d'extrémité 28 (figures 1 et 3). La partie supérieure de la bague 25 est en appui sur la protubérance 22 de l'élément de retenue 12 fixe, en empêchant tout mouvement de pivotement du doigt 13 vers l'intérieur du corps 11. Le revêtement 30 coloré est alors caché par la bague 25, ce qui indique l'état de verrouillage positif du mousqueton en position de fermeture.

La présence de la tête d'extrémité 28 tronconique permet un bon glissement de la corde à l'intérieur du corps 11 lorsque le doigt 13 est fermé. Le diamètre extérieur de l'épaulement 29 correspond sensiblement au diamètre de la bague 25 de verrouillage.

Selon une variante, la bague de verrouillage 25 à visser peut être remplacée par une bague coulissante ou rotative équipée d'un verrou.

## Revendications

1. Mousqueton comprenant un corps (11) fixe en forme de C, ayant une première extrémité conformée en un élément de retenue (12), et une deuxième extrémité d'articulation d'un doigt (13) mobile autour d'un axe (14) de pivotement entre une position fermée et une position ouverte, ledit doigt comportant:
- un élément d'accrochage (18) situé à l'opposé de l'axe (14) de pivotement pour coopérer avec l'élément de retenue (12) dans la position fermée,
- un ressort (19) de rappel du doigt (13) vers la position fermée,
- une bague (25) de verrouillage montée coaxialement autour du doigt (13) en ayant une longueur inférieure à celle du doigt, ladite bague étant déplaçable entre une première position verrouillée autorisant un blocage du doigt (13) dans la position fermée, et une deuxième position déverrouillée permettant le déplacement du doigt vers la position ouverte,
**caractérisé en ce que** l'élément d'accrochage (18) est coiffé par une tête d'extrémité (28) entourant partiellement l'élément de retenue (12) en position fermée du doigt (13), et comportant un épaulement (29) servant de butée de fin de course à la bague (25) dans la première position verrouillée, le diamètre extérieur dudit épaulement (29) correspondant sensiblement au diamètre de la bague (25) de verrouillage.

2. Mousqueton selon la revendication 1, **caractérisé en ce que** la tête d'extrémité (28) présente un angle d'inclinaison (A) compris entre 10° et 20° par rapport à la direction longitudinale du doigt (13).

3. Mousqueton selon la revendication 2, **caractérisé en ce que** la tête d'extrémité (28) comporte une portion latérale tronconique, et une saignée (31) frontale de passage de l'élément de retenue (12).

4. Mousqueton selon l'une quelconque des revendications 1 à 3, **caractérisé en ce que** l'élément de retenue (12) mâle comprend une languette (21) et une protubérance (22) formant une structure en T renversé, et que l'élément d'accrochage (18) femelle est doté d'un évidement (23) de réception de l'élément de retenue (12).

5. Mousqueton selon l'une quelconque des revendications 1 à 4, **caractérisé en ce que** la bague (25) de verrouillage comporte un premier filetage (26) coopérant par vissage avec un deuxième filetage (27) du doigt (13), lequel possède un nombre de filets inférieur à celui du premier filetage (26).

6. Mousqueton selon la revendication 5, **caractérisé en ce que** la périphérie du doigt (13) située entre le deuxième filetage (27) et l'épaulement (29) comprend un revêtement coloré (30) visible lorsque la bague (25) se trouve dans la deuxième position déverrouillée.

## Claims

1. A carabiner comprising a fixed C-shaped body (11) having a first end shaped as a securing part (12) and a second end for articulation of a gate (13) movable around a pivoting axis (14) between a closed position and an open position, said gate comprising:
- a latching part (18) situated opposite the pivoting axis (14) to operate in conjunction with the securing part (12) in the closed position,
- a return spring (19) biasing the gate (13) to the closed position,
- a locking ring (25) fitted coaxially around the gate (13) and having a smaller length than that of the gate, said ring being movable between a first locked position enabling the gate (13) to be locked in the closed position and a second unlocked position enabling the gate to be moved to the open position,
**characterized in that** the latching part (18) is capped by an end head (28) partially surrounding the securing part (12) in the closed position of the gate (13), and comprising a shoulder (29) acting as end-of-travel stop for the ring (25) in the first locked position, the external diameter of said shoulder (29) corresponding substantially to the diameter of the locking ring (25).

2. The carabiner according to claim 1, **characterized in that** the end head (28) presents an angle of incline (A) comprised between 10° and 20° with respect to the longitudinal direction of the gate (13).

3. The carabiner according to claim 2, **characterized in that** the end head (28) comprises a frustum-shaped lateral portion and a frontal groove (31) for passage of the securing part (12).

4. The carabiner according to claim 1, **characterized in that** the male securing part (12) comprises a tab (21) and a protuberance (22) forming an inverted T-shaped structure, and that the female latching part (18) is provided with a recess (23) for receiving the securing part (12).

5. The carabiner according to claim 1, **characterized in that** the locking ring (25) comprises a first thread (26) operating by screwing in conjunction with a second thread (27) of the gate (13), which has a smaller number of screw turns than that of the first thread (26).

6. The carabiner according to claim 5, **characterized in that** the periphery of the gate (13) situated between the second thread (27) and the shoulder (29) comprises a colored coating (30) visible when the ring (25) is in the second unlocked position.

## Patentansprüche

1. Karabiner, der einen starren, C-förmigen Körper (11) mit einem ersten Ende, das als Rückhalteelement (12) vorgesehen ist, und einem zweiten Ende zum Anlenken eines Fingers (13) umfasst, der um eine Schwenkachse (14) zwischen einer geschlossenen und einer offenen Stellung beweglich ist, welcher Finger umfasst:
- ein Befestigungselement (18), das sich gegenüber der Schwenkachse (14) befindet, um in geschlossener Stellung mit dem Rückhalteelement (12) zusammenzuwirken,
- eine Rückholfeder (19) zum Zurückholen des Fingers (13) in Richtung auf die geschlossene Stellung,
- einen Verriegelungsring (25), der koaxial um den Finger (13) montiert ist und dabei kürzer ist als der Finger, welcher Ring zwischen einer ersten, verriegelten Stellung, die eine Blockierung des Fingers (13) in der geschlossenen Stellung erlaubt, und einer zweiten, entriegelten Stellung, die eine Bewegung des Fingers in Richtung auf die offene Stellung zulässt, bewegt werden kann, **dadurch gekennzeichnet, dass** das Befestigungselement (18) von einem Endkopf (28) bedeckt ist, der das Rückhalteelement (12) in geschlossener Stellung des Fingers (13) teilweise umgibt und einen Rücksprung (29) umfasst, der dem Ring (25) in der ersten, verriegelten Stellung als Endstellungsanschlag dient, wobei der Außendurchmesser des Rücksprungs (29) im Wesentlichen dem Durchmesser des Verriegelungsrings (25) entspricht.

2. Karabiner nach Anspruch 1, **dadurch gekennzeichnet, dass** der Endkopf (28) einen Neigungswinkel (A) von 10 bis 20° bezogen auf die Längsrichtung des Fingers (13) aufweist.

3. Karabiner nach Anspruch 2, **dadurch gekennzeichnet, dass** der Endkopf (28) einen kegelstumpfförmigen seitlichen Bereich und vorne einen Einschnitt (31) zum Durchführen des Rückhalteelements (12) umfasst.

4. Karabiner nach einem der Ansprüche 1 bis 3, **dadurch gekennzeichnet, dass** das männliche Rückhalteelement (12) eine Zunge (21) und eine Auskragung (22) umfasst, die einen Aufbau wie ein umgedrehtes T bildet, und dass das weibliche Befestigungselement (18) mit einer Aussparung (23) zur Aufnahme des Rückhalteelements (12) versehen ist.

5. Karabiner nach einem der Ansprüche 1 bis 4, **dadurch gekennzeichnet, dass** der Verriegelungsring (25) ein erstes Gewinde (26) umfasst, das durch Verschrauben mit einem zweiten Gewinde (27) des Fingers (13) zusammenwirkt, welches weniger Gewindegänge als das erste Gewinde (26) hat.

6. Karabiner nach Anspruch 5, **dadurch gekennzeichnet, dass** der Umfang des Fingers (13), der sich zwischen dem zweiten Gewinde (27) und dem Rücksprung (29) befindet, eine farbige Beschichtung (30) aufweist, die sichtbar ist, wenn sich der Ring (25) in der zweiten, entriegelten Stellung befindet.
